# EUROPÄISCHE PATENTSCHRIFT

(11) **EP 2 241 597 B1**
(45) Veröffentlichungstag und Bekanntmachung des Hinweises auf die Patenterteilung: **11.03.2020**
(21) Anmeldenummer: 10158128.8
(22) Anmeldetag: 29.03.2010
(51) Int. Cl.: C08L 27/18, C08L 81/04, D07B 1/16

(54) **Polymercompound sowie Bauteile, hergestellt unter Verwendung des Compounds**
Polymer compound and components produced using the compound
Composé de polymère ainsi que composant fabriqué en utilisant le composé

(30) Priorität: 17.04.2009 DE 102009018636
(43) Veröffentlichungstag der Anmeldung: 20.10.2010
(73) Patentinhaber: ElringKlinger AG, 72581 Dettingen (DE)
(72) Erfinder: Schlipf, Michael, 89520 Heidenheim (DE); Stern, Claudia, 73497 Tannhausen (DE); Maier, Martin, 74379 Ingersheim (DE)
(74) Vertreter: Hoeger, Stellrecht & Partner Patentanwälte mbB

(56) Entgegenhaltungen:
- WO-A1-01/38749
- WO-A1-90/04618
- WO-A1-97/43102
- WO-A1-2008/003466
- DE-A1-102005 054 612
- US-A- 3 652 409
- US-A- 5 684 088

## Beschreibung

Die Erfindung betrifft ein neuartiges Polymercompound umfassend ein voll fluoriertes thermoplastisch verarbeitbares Kunststoffmaterial, insbesondere schmelzverarbeitbares PTFE (m-PTFE), sowie einen Anteil mindestens eines weiteren, hiervon verschiedenen Hochleistungs-Polymers ausgewählt aus der Gruppe von Polyphenylensulfid (PPS), Polyphenylensulfon (PPSO₂), Polyamid (PA), Polyimid (PI), Polyamidimid (PAI), und Polyetherimid (PEI) sowie Copolymeren und Derivaten dieser Polymere und Copolymere, wobei das Compound eine homogene Verteilung der Anteile der Polymere aufweist, entsprechend der Definition des Anspruchs 1.

Die Verwendung von herkömmlichem oder Standard-PTFE in Compounds mit verschiedenen der oben genannten Hochleistungspolymeren ist an sich bekannt. Solche Compounds werden durch eine Vermischung der verschiedenen Polymeren in Pulverform und, je nach Art der Hauptkomponente, durch anschließendes Press-Sintern oder Extrudieren hergestellt. Stellt das PTFE die Hauptkomponente dar, ist der Anteil an dem weiteren Hochleistungspolymer regelmäßig auf maximal 30 Gew.-% beschränkt. Im Fall, dass der Hauptbestandteil von dem weiteren Hochleistungspolymeren gestellt wird, ist der PTFE-Anteil typischerweise auf maximal 20 Gew.-% beschränkt.

Im ersten Fall werden bei Anteilen des weiteren Hochleistungspolymeren oberhalb von 20 Gew.-% die mechanischen Eigenschaften wie z.B. die Bruchspannung und/oder die Bruchdehnung merklich schlechter, da der hohe Anteil des weiteren Hochleistungspolymeren, das als eine Art Füllstoff in der PTFE-Matrix wirkt, den Zusammenhalt der PTFE-Matrix signifikant stört.

Im zweiten Fall haben größere PTFE-Gehalte zunächst zur Folge, dass das Compound mit dem weiteren Hochleistungspolymeren als Hauptbestandteil nicht mehr nach den klassischen Methoden der Thermoplastverarbeitung verarbeitbar ist.

Wendet man das so genannte Hot-Compression-Moulding-Verfahren an, sind etwas höhere PTFE-Anteile bis 30 Gew.-% möglich. Bei noch höheren PTFE-Anteilen wird die von dem weiteren Hochleistungspolymeren gebildete Matrix signifikant gestört und die mechanischen Werkstoffeigenschaften fallen drastisch ab.

Unbefriedigend bei diesen Compounds ist, dass diese nicht mit einem homogenen Schmelzgefüge erhalten werden können. Die durch die Compoundierung mit dem anderen Polymeranteil angestrebten Verbesserungen der Eigenschaften der jeweiligen Hauptkomponenten können deshalb bestenfalls in geringem Umfang erzielt werden.

Aus diesen Gründen sind Compounds mit dazwischen liegenden Mischungsverhältnissen nicht verfügbar.

Typischerweise bleiben bei Compounds mit dem weiteren Hochleistungspolymeren, beispielsweise PI oder PPS, als Hauptbestandteil bei den beschriebenen Verfahren die PTFE-Partikel auch nach der Thermoplast-Verarbeitung noch als individuell erkennbare Körner erhalten. Die Partikel der PTFE-Komponente bleiben unter den für die weiteren Hochleistungspolymeren üblichen Verarbeitungstemperaturen von typischerweise 320 °C ± 10 °C als solche vollständig erhalten.

Bei Compounds mit dem Hauptbestandteil PTFE bleiben die Partikel des weiteren Hochleistungspolymeren auch nach Durchlaufen der für PTFE üblichen Verarbeitungsverfahren als individuelle Partikel erhalten, obwohl zwar beide Komponenten unter den für PTFE üblichen Sintertemperaturen von ca. 360 bis 380 °C aufschmelzen, jedoch wegen der hohen Schmelzviskosität des herkömmlichen oder Standard-PTFE (typischerweise bei 380 °C 10¹⁰ bis 10¹³ Pa • s) einer seits und andererseits wegen der Tatsache, dass bei diesen PTFE-typischen Verarbeitungsverfahren keine Scherkräfte auf die Polymerschmelze einwirken, keine oder nur geringfügige gegenseitige Vermischungseffekte auftreten.

Wenn wie vorstehend oder in den folgenden Teilen der Beschreibung auf Eigenschaften von herkömmlichem oder Standard-PTFE verwiesen wird, wird auf Eigenschaften, wie sie für die Standard-PTFE-Type Dyneon TF 1750 beobachtet werden, abgestellt.

Aus der WO 97/43102 A1 ist eine Zubereitung aus Suspensions-PTFE und untergeordneten Mengen eines thermoplastischen Füllstoffs in Form von PEEK oder PPS bekannt, die mittels Spritzgießen verarbeitbar ist.

In der WO 01/38749 A1 empfehlen die Erfinder PTFE-Compositmaterialien, wobei die PTFE-Komponente pastenextrudierbar sein soll.

Die WO 90/04618 A1 schlägt PTFE-Composites vor, die einen Anteil von weniger als 23 Gew.-% an Polyamidimid enthalten.

Die US 3,652,409 beschreibt Polyimid-PTFE-Polymerzusammensetzungen, deren Komponenten entweder mechanisch gemischt und zu feinteiligen Mischungen verarbeitet werden oder die basierend auf einer PTFE-Suspension, der Polyimidpolymer zugesetzt wird, mittels Ausfällung erhalten werden.

Einen anderen Weg beschreitet die WO 2008/003466 A1, die empfiehlt PTFE zu funktionalisierten, d.h. über eine reaktive Schmelzextrusion Polyamidimid und/oder Polyimid und/oder Polyetherketon mit dem Fluorpolymer chemisch zu koppeln.

In ähnlicher Weise schlägt die DE 10 2005 054 612 A1 vor, PEK-Polymer in der Schmelze mit einem Perfluorpolymer chemisch zu koppeln.

Aus dem US-Patent US 5,684,088 A ist eine PPS-Polymerzusammensetzung bekannt, die PTFE-Partikel als Füllstoff enthält.

Aufgabe der Erfindung ist es, Polymercompounds zur Verfügung zu stellen, die in Bezug auf ihre Eigenschaften gegenüber herkömmlichem PTFE einerseits und dem oder den weiteren Hochleistungs-Polymeren andererseits verbessert sind. Diese Aufgabe wird durch ein Polymercompound entsprechend der Definition des Anspruchs 1 gelöst.

Aufgrund der Auswahl der PTFE-Komponente als voll fluoriertes thermoplastisches Kunststoffmaterial lässt sich das Compound mit großer Homogenität in der Gefügeausbildung erhalten.

Dies zeigt sich insbesondere daran, dass bei den erfindungsgemäßen Compounds nach Verarbeitung durch für Thermoplaste übliche Methoden, also beispielsweise mittels Extrusion oder Spritzgussverfahren, im erstarrten Endprodukt die einzelnen Komponenten nicht mehr als ursprüngliches Gemisch zweier pulverförmiger Stoffe identifizierbar sind.

Im Gegensatz zu den erfindungsgemäßen Compounds lassen sich durch spezielle Methoden, z.B. Anfärbetechniken in Verbindung mit Lichtmikroskop, oder unter Verwendung von polarisiertem Licht, in herkömmlichen Compounds Phasen der Einzelkomponenten erkennen. Je nach Typ des verwendeten PTFE verbleiben in dem Compound größere oder kleinere PTFE-Inselstrukturen erhalten, bei emulsionspolymerisiertem PTFE mit typischen Ausdehnungen von 0,2 µm oder mehr, im Falle von suspensionspolymerisiertem PTFE mit typischen Ausdehnungen von 15 µm oder mehr.

Das erfindungsgemäße Compound ist demgegenüber im Wesentlichen frei von PTFE-Inselstrukturen.

Bei den erfindungsgemäßen Compounds entfällt eine Beschränkung der Mischungsverhältnisse wie oben ausgeführt, und die Zusammensetzung des Compounds kann bezüglich der Anteile an voll fluoriertem thermoplastischem Kunststoffmaterial, insbesondere schmelzverarbeitbarem PTFE, sowie der oder den weiteren Hochleistungs-Polymer-Komponente(n) in weiten Bereichen variiert werden.

Überraschenderweise zeigen die erfindungsgemäßen Compounds erheblich verbesserte mechanische Eigenschaften gegenüber den herkömmlichen PTFE-Compounds und erschließen sich damit eine Vielzahl von Einsatzmöglichkeiten. Insbesondere lassen sich erfindungsgemäße Compounds, die einen hohen Anteil an weiterem Hochleistungspolymer und einen niederen Anteil an thermoplastisch verarbeitbarem PTFE enthalten, mit hoher Bruchdehnung herstellen.

Diese Eigenschaften sind insbesondere dann gefordert, wenn zum Einen das typische Eigenschaftsspektrum der Reinkomponente des Hochleistungspolymeren, also ein hoher E-Modul, ein hoher Deformationswiderstand und eine hohe Bruchfestigkeit, gefordert sind, zum Anderen aber die hohe Sprödigkeit des Hochleistungspolymeren einen erfolgreichen Einsatz verhindert.

Anwendungen mit diesem Anforderungsprofil sind beispielsweise groß dimensionierte Dichtungen in Anlagen zur Ölförderung, einschließlich Behälter, Schläuche oder Rohre von Ölfördertürmen oder Ölförderschiffen oder allgemein des Chemieanlagenbaues, in denen Dichtungen aus den erfindungsgemäßen Werkstoffen für eine sichere Abdichtung Fertigungstoleranzen von Stahlkonstruktionen kompensieren müssen, was eine hohe Anpassungsfähigkeit erfordert. Auch unterliegen diese Anlagen im Einsatz hohen Temperatur-, Krafteintrags- und Druckschwankungen mit den daraus resultierenden Dimensionsänderungen, was eine gute Folgefähigkeit des Dichtungswerkstoffes erforderlich macht.

PTFE-Materialien, insbesondere auch Standard-PTFE, haben von Haus aus weit höhere Bruchdehnungswerte als die weiteren Hochleistungspolymeren. Aber auch hier beobachtet man bei größer werdenden Anteilen hiervon im Compound einen drastischen Abfall der Bruchdehnungswerte.

Die erfindungsgemäßen Compounds weisen demgegenüber bei gleichen Verhältnissen der Anteile an voll fluoriertem Kunststoffmaterial zu weiterem Hochleistungspolymer, insbesondere auch PAI, PEI oder PPS, deutlich günstigere Bruchdehnungswerte auf, die in einer Vielzahl an Applikationen von großer Bedeutung sind.

Darüber hinaus eignen sich die erfindungsgemäßen Compounds zur Herstellung hochtemperaturfester Bauteile, die ein günstiges Brandverhalten zeigen. Solche Bauteile sind im Flugzeugbau von großem Interesse, beispielsweise in Form von flexiblen elektrischen Kabeln.

Bei der Verwendung der erfindungsgemäßen Compounds zur Herstellung von Kabelisolierungen kommen insbesondere deren bessere elektrische Eigenschaften sowie die höhere Durchschlagfestigkeit zum Tragen.

Die erfindungsgemäßen Compounds eignen sich außerdem hervorragend für die Herstellung von Spritzguss-Formteilen, wobei insbesondere die hohe mechanische Festigkeit der erhaltenen Bauteile gegenüber Druck- und Zugbelastungen von Vorteil sind.

Bei der Herstellung von Schläuchen spielen die mit den erfindungsgemäßen Compounds erzielbaren höheren mechanischen Festigkeitswerte, die höhere Druckbeständigkeit und der damit verbundene höhere Berstdruck sowie die höhere Druckstandfestigkeit bei der Langzeit-Druckbelastung sowohl bei Raumtemperatur als auch bei Temperaturen bis zu 250 °C eine große Rolle.

Nicht zuletzt sind mit den erfindungsgemäßen Compounds geschäumte Materialien herstellbar, bei denen eine engere Porengrößenverteilung, geringere Dichten und damit verbunden bessere Isolationseigenschaften, insbesondere auch bei Kabelisolierungen, möglich werden. Unter die genannten Kabelisolierungen fallen beispielsweise die Außenisolierung eines zentral positionierten Innenleiters oder das isolierende Dielektrikum eines Koaxialkabels, das konzentrisch zwischen dem Innenleiter und dem umhüllenden Außenleiter positioniert ist.

Darüber hinaus ermöglichen die erfindungsgemäßen Compounds die Herstellung weiterer Materialien mit hoher Flexibilität, beispielsweise Folien, wie sie z.B. für die Herstellung von flexiblen Leiterplatten benötigt werden. Ein typischer Vertreter für m-PTFE ist Moldflon® MF10005. Folien aus Moldflon® MF10005 mit der Stärke 50 µm weist nach dem Testverfahren IPC-TM-650, 2.4.3 typischerweise eine Biegewechselfestigkeit von > 1,2 Mio. Testzyklen auf. Festigkeitswerte lassen sich mit dem weiteren Hochleistungs-Polymer erfindungsgemäß steigern, ohne dass die Biegewechselfestigkeit merklich leidet. Neben der Verwendung für flexible Leiterplatten sind die erfindungsgemäßen Compounds auch bestens geeignet für die Herstellung von Starrflex-Leiterplatten.

Ferner lassen sich erfindungsgemäße Compounds mit verbesserten Gleiteigenschaften herstellen, wobei einerseits ein Stick-Slip-Effekt vermieden werden kann und andererseits der Reibungskoeffizient sehr niedrig ist, insbesondere bei den erfindungsgemäßen Compounds mit hohem Anteil an schmelzverarbeitbarem PTFE. Hier sind bei einer Gleitgeschwindigkeit von V = 0,6 m/s und einer Belastung senkrecht zur Gleitrichtung von 0,5 bis 1,5 N/mm² Reibungskoeffizienten im Bereich von 0,1 bis 0,3 möglich.

Einer der wichtigen Einsatzbereiche der erfindungsgemäßen Compounds ist demgemäß auch der der Gleitlager, insbesondere der der Trockenlaufgleitlager.

Eine der Folgen des niederen Reibungskoeffizienten sind die geringen Verschleißwerte der erfindungsgemäßen Compounds. Auch dies ist u.a. für die Gleitlageranwendung von Bedeutung.

Darüber hinaus sind Bauteile aus den erfindungsgemäßen Compounds auch für höhere spezifische Flächenpressungen geeignet, zeigen einen geringeren Abrieb und damit eine längere Lebensdauer. Wiederum ist hier eine wichtige Eigenschaft für Gleitlageranwendungen vorhanden.

Die vorgenannten Vorteile der erfindungsgemäßen Compounds mit voll fluorierten thermoplastischen Polymermaterialien, insbesondere m-PTFE, gelten im Vergleich mit Compounds, die bei gleicher prozentualer Zusammensetzung als voll fluorierte Komponente Standard-PTFE oder chemisch modifiziertes, hochmolekulares PTFE beinhalten.

Die erfindungsgemäßen Compounds werden auf dem Weg der Schmelzecompoundierung hergestellt.

Als voll fluorierte thermoplastische Kunststoffmaterialien kommen insbesondere TFE-Copolymere in Betracht, bei denen das Comonomere einen Mindestanteil von 0,2 Mol-% aufweist.

Bevorzugt wird das Comonomere ausgewählt ist aus Hexafluorpropylen, Perfluoralkylvinylether, Perfluor-(2,2-dimethyl-1,3-dioxol) und Chlortrifluorethylen.

Auch Copolymere von TFE mit Chlortrifluorethylen werden im Zusammenhang mit der vorliegenden Erfindung unter voll fluorierte Kunststoffmaterialien subsummiert, da der von Fluor verschiedene Halogenanteil vergleichsweise gering ist.

Ein häufig im Rahmen der Erfindung einzusetzendes Comonomer vom Polyalkylvinylether-Typ ist der Perfluorpropylvinylether (PPVE). Bei diesem Comonomeren empfehlen sich Anteile von weniger als 3,5 Mol-%, da hier die PTFE-Eigenschaften weitgehend erhalten bleiben und trotzdem eine thermoplastische Verarbeitung möglich ist. Weiter bevorzugt ist der Comonomeranteil beschränkt auf weniger als 3 Mol-%, noch weiter bevorzugt sind Comonomeranteile von weniger als 2,5 Mol-%, beispielsweise 1 Mol-% oder weniger bzw. 0,5 Mol-% oder weniger.

Besonders bevorzugt wird thermoplastisch verarbeitbares PTFE, auch schmelzverarbeitbares PTFE oder kurz m-PTFE genannt, verwendet. Eine Vielzahl solcher Materialien ist beispielsweise in der WO 01/60911 und der WO 03/078481 beschrieben.

Auch PFA stellt ein geeignetes voll fluoriertes thermoplastisch verarbeitbares Kunststoffmaterial im Sinne der vorliegenden Erfindung dar.

Als erfindungsgemäß zu verwendendes voll fluoriertes Kunststoffmaterial kommen neben den TFE-Copolymeren auch Polymerblends von PTFE und einem oder mehreren weiteren thermoplastisch verarbeitbaren fluorierten Kunststoffen zum Einsatz.

Diese weiteren voll halogenierten Kunststoffmaterialien werden insbesondere ausgewählt aus der Gruppe der PTFE-Mikropulver. Hierbei handelt es sich um PTFE-Typen mit im Vergleich zu hochmolekularem (Standard-)PTFE niederem Molekulargewicht und niederer Schmelzviskosität. Sie werden typischerweise hergestellt entweder durch Emulsionspolymerisation, durch thermomechanischen Abbau von hochmolekularem PTFE im Extruder oder durch Strahlenabbau von hochmolekularem PTFE, gefolgt von einem Mahlprozess.

Die Eigenschaftsunterschiede von herkömmlichem oder hochmolekularem (Standard-)PTFE und niedermolekularen PTFE-Mikropulvern lassen sich beispielsweise wie folgt darstellen (vgl. S. Ebnesajjad, Fluoroplastics, Vol. 1, Non-Melt Processible Fluoro-plastics, Verlag William Andrew Publishing, 2000):

| Produkt | Molekulargewicht | Schmelzviskosität bei 380 °C in Pa·s |
|---|---|---|
| Standard PTFE | ca. 10⁶ - ca. 10⁸ | ca. 10¹⁰ - ca. 10¹³ |
| Mikropulver | ca. 10⁴ - ca. 10⁶ | ca. 10² - ca. 10⁵ |

Beispiele für solche Polymerblends finden sich ebenfalls in den Offenlegungsschriften WO 01/60911 und WO 03/078481.

Der Anteil der weiteren Hochleistungspolymere an der Gesamtmasse des erfindungsgemäßen Compounds beträgt vorzugsweise 3 Gew.-% oder mehr. Unterhalb eines solchen Anteils ist die Eigenschaftsverbesserung teilweise nicht besonders ausgeprägt.

Andererseits sollte der Anteil an dem voll fluorierten thermoplastisch verarbeitbaren Polymer an der Gesamtmasse des erfindungsgemäßen Compounds vorzugsweise 1 Gew.-% oder mehr betragen. Dies stellt sicher, dass die Eigenschaftsverbesserungen durch das voll fluorierte Kunststoffmaterial merklich sind. Verhältnisse der Anteile von voll fluoriertem thermoplastischem Kunststoffmaterial zu den Anteilen des oder der weiteren Hochleistungspolymeren liegen im Bereich von 20 : 80 bis 70 : 30.

Hervorzuheben ist die Eigenschaft der erfindungsgemäßen Compounds, sich gut auf zerspanenden CNC-Maschinen verarbeiten zu lassen. Dies eröffnet den erfindungsgemäßen Compounds eine Vielzahl von interessanten Anwendungsgebieten, die den auf herkömmlichem PTFE basierenden Compounds bislang verschlossen waren.

Bevorzugte erfindungsgemäße Compounds können Additive enthalten, insbesondere in Mengenanteilen von bis zu 60 Gew.-%, bezogen auf die Gesamtmasse des Compounds. Besonders bevorzugte erfindungsgemäße Compounds enthalten bis zu 40 Gew.-% an Additiven.

Typische Untergrenzen für Additive liegen bei 0,5 Gew.-%.

Sind Farbstoffe als Additive in dem Compound enthalten, liegt die Untergrenze für diesen Typ Additiv typisch bei 0,01 Gew.-%. Die Obergrenze für Farbstoffanteile im Compound liegt typischerweise bei 3 Gew.-%.

Als Additive kommen des weiteren sowohl organische als auch anorganische Füllstoffe in Betracht.

Die Füllstoffe können insbesondere in Faserform, granular oder in Nadelform vorliegen.

Besonders bevorzugt sind funktionelle Füllstoffe, wie z.B. Festschmierstoffe wie z.B. BN, SiC, MoS₂, PTFE, Graphit und dgl. Hier kommt insbesondere auch im Fall von (Standard-)PTFE als Füllstoff der Vorteil des erfindungsgemäßen Compounds zum Tragen, dass sich die verbesserten mechanischen Eigenschaften des Compounds durch Füllstoffanteile nicht merklich verschlechtern, wenn die Anteile sich in den oben skizzierten Grenzen halten.

So lassen sich mit (konventionellem) PTFE als Füllstoff insbesondere im Brandfall nicht-tropfende Kunststoffmaterialien erzielen, die gegenüber den herkömmlichen Materialien in den mechanischen Eigenschaften überlegen sind. Diese Materialien eignen sich besonders als Baustoffe, die in öffentlichen Gebäuden und Einrichtungen Verwendung finden.

Weitere geeignete verstärkende Füllstoffe sind z.B. Glasfasern und Kohlefasern. Ruß eignet sich insbesondere als Füllstoff, um eine gewünschte elektrische Leitfähigkeit herzustellen.

Weitere Beispiele für geeignete Füllstoffe sind Kohlepartikel, Glaskugeln und Glashohlkugeln.

Diese und weitere Vorteile der Erfindung werden im Folgenden anhand der Beispiele und Figuren noch im Einzelnen erläutert.

Es zeigen:
- Figur 1:: lichtmikroskopische Aufnahme eines aus einem erfindungsgemäßen Compound hergestellten Bauteils; und
- Figur 2:: Draufsicht auf einen Probekörper nach SPI-Standard FD-105.

### Beispiele

### Beispiele 1 bis 3

Erfindungsgemäße Compounds aus PPS und m-PTFE vom Typ Moldflon® MF 10005 wurden in einem thermoplastischen Mischvorgang in einem antikorrosiv ausgerüsteten Doppelschneckenextruder hergestellt. Die dabei verwendeten Verarbeitungsbedingungen sind in Tabelle 1 zusammengefasst.

Das verwendete PPS-Material ist als Ticona® PPS 0205 im Handel.

Moldflon® MF 10005 ist ein m-PTFE-Polymer modifiziert mit einem Comonomeren-Gehalt von 1,7 Gew.-% PPVE. Die Schmelzfließrate MFR (372 / 5) beträgt 5 g/10 min.

**Tabelle 1**

| **Parameter** | **Einheit** | **Wert** |
|---|---|---|
| Extruder | | |
| Schneckendurchmesser | mm | 25 |
| L/D | - | 42 |

| Temperaturen | | |
|---|---|---|
| C1 | °C | 345 |
| C2 | °C | 355 |
| C3 | °C | 365 |
| C4 | °C | 365 |
| C5 | °C | 370 |
| Düse | °C | 375 |
| Schneckendrehzahl | U/min | 90 |
| Massedruck | bar | 1 - 2 |
| Massetemperatur | °C | 394 |

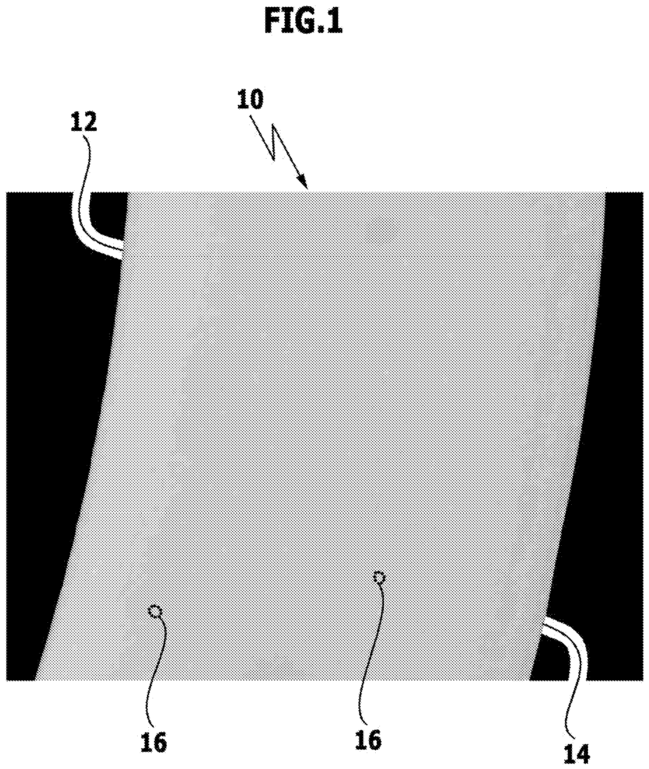

Aufgrund der ausgezeichneten Schmelzeverarbeitbarkeit der erfindungsgemäßen Compounds sind die erfindungsgemäßen Proben im Gegensatz zu den aus herkömmlichen Compounds hergestellten frei von Poren (vgl. Abbildung der Figur 1).

Die verbesserte Homogenität in der Verteilung der beiden Polymermaterialien der Compounds der erfindungsgemäßen Proben ist aus der Abbildung der Figur 1 ersichtlich.

Figur 1 zeigt einen Ausschnitt einer lichtmikroskopischen Aufnahme einer Zylinderwand 10 eines aus einem Compound gemäß Beispiel 3 gefertigten Rohres, die eine vollständig homogene Verteilung der beiden Polymerkomponenten PPS und m-PTFE über die gesamte Wanddicke von der Innenoberfläche 12 bis zur Außenoberfläche 14 erkennen lässt. Der radiale Abstand von Innenoberfläche 12 zur Außenoberfläche 14 beträgt 900 µm.

Bei Compounds, bei denen anstelle der m-PTFE Komponente Standard-PTFE zum Einsatz kommt, sind die PTFE-Anteile als Inselstrukturen vorhanden, die schematisch zum Vergleich in Figur 1 eingezeichnet und mit dem Bezugszeichen 16 versehen wurden.

Aus Compounds mit Mischungsverhältnissen von 20 Gew.-% PPS und 80 Gew.-% Moldflon® MF 10005 (Beispiel 1) sowie 50 Gew.-% PPS und 50 Gew.-% Moldflon® MF 10005 (Beispiel 2) und 80 Gew.-% PPS und 20 Gew.-% Moldflon® MF 10005 (Beispiel 3) wurden im klassischen Schmelzepressverfahren bei einer Temperatur von 340 °C Prüfplatten in Scheibenform mit einem Durchmesser von 60 mm und einer Dicke von 1,5 mm gefertigt.

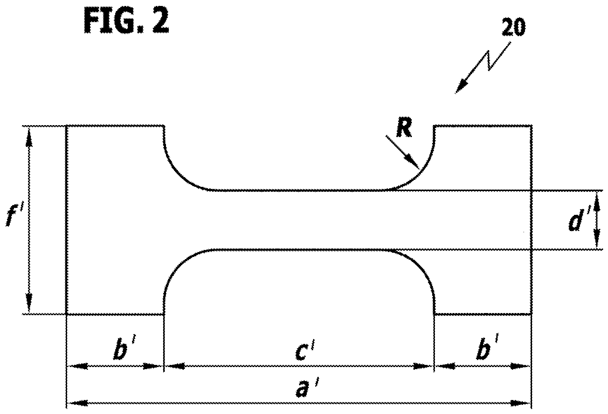

Aus den Prüfplatten wurden FD-105-Probekörper 20 nach DIN EN ISO 12086 (vgl. Figur 2) gestanzt und die mechanischen Kennwerte E-Modul, Bruchspannung und Bruchdehnung gemäß DIN EN ISO 527-2 geprüft. Die erhaltenen Messwerte sind in Tabelle 2 aufgeführt. Die Standardabweichungen sind aus 3 Messwerten ermittelt.

Die Abmessungen des Prüfkörpers 20 der Figur 2 waren wie folgt:

| | | | |
|---|---|---|---|
| a' = | 38 mm | | |
| b' = | 8 mm | | |
| c' = | 22 mm | | |
| e' = | 5 mm | | |
| f' = | 15 mm | | |
| Radius R = | 5 mm | Dicke des Prüfkörpers = | 1,5 mm |

**Tabelle 2**

| **Beispiel** | **Gewichtsverhältnis im Compound PPS : m-PTFE** | **E-Modul [N/mm²]** | **Bruchspannung [N/mm²]** | **Bruchdehnung [%]** |
|---|---|---|---|---|
| 1 | 20:80 | 850 ± 50 | 13 ± 1 | 200 ± 30 |
| 2 | 50:50 | 900 ± 50 | 14 ± 1 | 90 ± 10 |
| 3 | 80:20 | 2500 ± 50 | 60 ± 1 | 20 ± 4 |

### Vergleichsbeispiele 1 bis 3

Während in den Beispielen 1 bis 3 die Prüfkörper aus Prüfplatten ausgestanzt wurden, die im Schmelzepressverfahren hergestellt worden waren, erfolgte die Prüfkörperfertigung bei den Vergleichsbeispielen 1 und 2 durch Ausstanzen aus einer Schälfolie der Stärke 1,5 mm, die durch Abschälen von einem zylindrischen Körper mit Innendurchmesser 40 mm und Außendurchmesser 75 mm hergestellt wurden. Es wurde auch hier ein Prüfkörper 20 gemäß Figur 2 (FD-105 nach DIN EN ISO 12086) verwendet.

Der zylindrische Körper wurde durch Pressen der Polymerpartikelmischung bei 300 bar und Sintern im Umluftofen bei 362 °C während 3 Tagen hergestellt.

Die verwendete Standard-PTFE-Type war Dyneon TF 1750, das PPS war vom Typ 0205 P4 der Firma Ticona. Die Compounds wurden in einem GLASS Vakuum-Allround-Schnellmischer VAS 600 hergestellt bei einer Mischzeit von 6 min.

Als Vergleichsbeispiel 3 sind in der Tabelle 3 Werte eines kommerziell erhältlichen PPS-PTFE-Compounds mit einem Mischungsverhältnis von 85 Gew.% PPS und 15 Gew.% Standard-PTFE zitiert, die aus dem Datenblatt für das Compound TECACOMP® PPS TF15 (Fa. Ensinger Compounds) entnommen sind. Die Messwerte stammen von Prüfkörpern Typ 1A nach DIN ISO 527.

**Tabelle 3**

| **Vergleichsbeispiel** | **Gewichtsverhältnis im Compound PPS : Standard-PTFE** | **E-Modul [N/mm²]** | **Bruchspannung [N/mm²]** | **Bruchdehnung [%]** |
|---|---|---|---|---|
| 1 | 10 : 90 | - | 21 | 300 |
| 2 | 15 : 85 | - | 18 | 280 |
| 3 | 85 : 15 | 3000 | 65 | 5 |

Tabelle 3 weist die Werte für den E-Modul, Bruchspannung und Bruchdehnung gemäß DIN EN ISO 527-2 für die Materialien der Vergleichsbeispiele 1 bis 3 aus.

## Patentansprüche

1. Polymercompound, umfassend einen Anteil eines voll fluorierten thermoplastisch verarbeitbaren Polymermaterials sowie ein Anteil mindestens eines weiteren, hiervon verschiedenen Hochleistungs-Polymers ausgewählt aus der Gruppe von Polyphenylensulfid (PPS), Polyphenylensulfon (PPSO₂), Polyamid (PA), Polyimid (PI), Polyamidimid (PAI), und Polyetherimid (PEI) sowie Copolymeren dieser Polymere und Copolymere, wobei das Gewichtsverhältnis der Anteile an voll fluoriertem thermoplastisch verarbeitbarem Kunststoffmaterial zu den Anteilen des weiteren Hochleistungs-Polymers 20 : 80 bis 70 : 30 beträgt, wobei das Compound im Wege der Schmelzecompoundierung hergestellt ist und eine homogene Verteilung der Anteile der Polymere und des Polymermaterials aufweist.

2. Compound nach Anspruch 1, **dadurch gekennzeichnet, dass** das voll fluorierte thermoplastisch verarbeitbare Polymermaterial schmelzverarbeitbares PTFE und/oder PFA umfasst,
wobei vorzugsweise das voll fluorierte thermoplastisch verarbeitbare Polymermaterial 50 Gew.-% oder mehr an schmelzverarbeitbarem PTFE umfasst.

3. Compound nach Anspruch 2, **dadurch gekennzeichnet, dass** das schmelzverarbeitbare PTFE ein TFE-Copolymer ist, wobei das Comonomer ausgewählt ist aus Hexafluorpropylen, Perfluoralkylvinylether, Perfluor-(2,2-dimethyl-1,3-dioxol) und Chlortrifluorethylen.

4. Compound nach einem der Ansprüche 1 bis 3, **dadurch gekennzeichnet, dass** das Comonomer Perfluoralkylvinylether, insbesondere Perfluorpropylvinylether (PPVE), ist, dessen Gehalt 0,2 bis weniger als 3,5 Mol-% beträgt.

5. Compound nach Anspruch 4, **dadurch gekennzeichnet, dass** die Bruchdehnung gemäß DIN EN ISO 527-2 des Compounds, gemessen an einem FD-105-Probekörper nach DIN EN ISO 12086, 10 % oder mehr, weiter bevorzugt 20 % oder mehr beträgt.

6. Compound nach einem der Ansprüche 1 bis 5, **dadurch gekennzeichnet, dass** das Compound porenfrei ist.

7. Compound nach einem der Ansprüche 1 bis 6, **dadurch gekennzeichnet, dass** das Compound Additive umfasst, insbesondere mit Anteilen von bis 60 Gew.-% am Gesamtgewicht des Compounds.

8. Compound nach Anspruch 7, **dadurch gekennzeichnet, dass** als Additive ein oder mehrere Füllstoffe enthalten sind.

9. Compound nach Anspruch 7 oder 8, **dadurch gekennzeichnet, dass** der oder die Füllstoffe ausgewählt sind aus BN, SiC, MoS₂, PTFE, Kohlefasern, Glaskugeln, Glashohlkugeln, Glasfasern, Ruß, Kohlepartikeln und Graphit.

10. Bauteil, insbesondere mechanisch belastetes Bauteil, hergestellt unter Verwendung eines Compounds gemäß einem oder mehreren der Ansprüche 1 bis 9.

11. Bauteil nach Anspruch 10, **dadurch gekennzeichnet, dass** das Bauteil als Rohr oder als flexibler Schlauch ausgebildet oder als Spritzgussteil hergestellt ist.

12. Bauteil nach Anspruch 10, **dadurch gekennzeichnet, dass** das Compound geschäumt ist.

13. Elektrisches Kabel, insbesondere Hochfrequenzkabel, mit einer Isolierung hergestellt unter Verwendung eines Compounds gemäß einem der Ansprüche 1 bis 9.

14. Elektrisches Kabel nach Anspruch 13, **dadurch gekennzeichnet, dass** die Isolierung eine Schaumstruktur aufweist.

15. Gleitlager, insbesondere Trockenlaufgleitlager, hergestellt untere Verwendung eines Compounds gemäß einem der Ansprüche 1 bis 9.

## Claims

1. Polymer compound comprising a proportion of a fully fluorinated thermoplastically workable polymer material as well as a proportion of at least one further high-performance polymer different therefrom selected from the group of polyphenylene sulfide (PPS), polyphenylene sulfone (PPSO₂), polyamide (PA), polyimide (PI), polyamideimide (PAI), and polyetherimide (PEI) as well as copolymers of these polymers and copolymers, wherein the weight ratio of the proportions of the fully fluorinated thermoplastically workable plastics material to the proportions of the further high-performance polymer is 20 : 80 to 70 : 30, wherein the compound is produced by way of melt-compounding and has a homogeneous distribution of the proportions of the polymers and the polymer material.

2. Compound in accordance with Claim 1, **characterized in that** the fully fluorinated thermoplastically workable polymer material comprises melt-processable PTFE and/or PFA,
wherein preferably the fully fluorinated thermoplastically workable polymer material comprises 50% by weight or more of melt-processable PTFE.

3. Compound in accordance with Claim 2, **characterized in that** the melt-processable PTFE is a TFE copolymer, wherein the comonomer is selected from hexafluoropropylene, perfluoroalkyl vinyl ether, perfluoro-(2,2-dimethyl-1,3-dioxol), and chlorotrifluoroethylene.

4. Compound in accordance with any one of Claims 1 to 3, **characterized in that** the comonomer is perfluoroalkyl vinyl ether, in particular perfluoropropyl vinyl ether (PPVE), the content of which is 0.2 to less than 3.5 mole%.

5. Compound in accordance with Claim 4, **characterized in that** the elongation at break in accordance with DIN EN ISO 527-2 of the compound, measured on a FD-105 test piece according to DIN EN ISO 12086, is 10% or more, more preferably 20% or more.

6. Compound in accordance with any one of Claims 1 to 5, **characterized in that** the compound is free of pores.

7. Compound in accordance with any one of Claims 1 to 6, **characterized in that** the compound comprises additives, in particular in proportions of up to 60% by weight of the total weight of the compound.

8. Compound in accordance with Claim 7, **characterized in that** one or more fillers are contained as additives.

9. Compound in accordance with Claim 7 or 8, **characterized in that** the filler or fillers are selected from BN, SiC, MoS₂, PTFE, carbon fibers, glass spheres, hollow glass spheres, glass fibers, carbon black, carbon particles and graphite.

10. Structural part, in particular mechanically loaded structural part, produced using a compound in accordance with one or more of Claims 1 to 9.

11. Structural part in accordance with Claim 10, **characterized in that** the structural part is configured as a pipe or as a flexible hose or is produced as an injection-moulded part.

12. Structural part in accordance with Claim 10, **characterized in that** the compound is foamed.

13. Electric cable, in particular high-frequency cable, with an insulation produced using a compound in accordance with any one of Claims 1 to 9.

14. Electric cable in accordance with Claim 13, **characterized in that** the insulation has a foam structure.

15. Plain bearing, in particular dry-running plain bearing, produced using a compound in accordance with any one of Claims 1 to 9.

## Revendications

1. Composé de polymère comprenant une proportion d'un matériau polymère entièrement fluoré transformable à l'état thermoplastique et une proportion d'au moins un autre polymère haute performance, différent du premier, choisi dans le groupe du sulfure de polyphénylène (PPS), de la polyphénylène sulfone (PPSO₂), du polyamide (PA), du polyimide (PI), du polyamide-imide (PAI) et du polyéther-imide (PEI) ainsi que des copolymères de ces polymères et copolymères, le rapport en poids des proportions du matériau plastique entièrement fluoré transformable à l'état thermoplastique et des proportions de l'autre polymère haute performance étant de 20:80 à 70:30, le composé étant fabriqué par le biais du compoundage à l'état fondu et présentant une répartition homogène des proportions des polymères et du matériau polymère.

2. Composé selon la revendication 1, **caractérisé en ce que** le matériau polymère entièrement fluoré transformable à l'état thermoplastique comprend du PTFE et/ou du PFA transformable à l'état fondu, le matériau polymère entièrement fluoré transformable à l'état thermoplastique comprenant 50 % en poids ou plus de PTFE transformable à l'état fondu.

3. Composé selon la revendication 2, **caractérisé en ce que** le PTFE transformable à l'état fondu est un copolymère de TFE, le co-monomère étant choisi parmi l'hexafluoropropylène, le perfluoroalkylvinyléther, le perfluoro-2,2-diméthyl-1,3-dioxol et le chlorotrifluoroéthylène.

4. Composé selon l'une des revendications 1 à 3, **caractérisé en ce que** le co-monomère est le perfluoroalkylvinyléther, en particulier le perfluoropropylvinyléther (PPVE), dont la teneur est de 0,2 à moins de 3,5 % en mole.

5. Composé selon la revendication 4, **caractérisé en ce que** l'allongement à rupture du composé, selon la norme DIN EN ISO 527-2, mesurée sur une éprouvette FD-105 d'après la norme DIN EN ISO 12086, est de 10 % ou plus, de manière préférée de 20 % ou plus.

6. Composé selon l'une des revendications 1 à 5, **caractérisé en ce que** le composé est dépourvu de pores.

7. Composé selon l'une des revendications 1 à 6, **caractérisé en ce que** le composé comprend des additifs, en particulier avec des proportions allant jusqu'à 60 % en poids sur le poids total du composé.

8. Composé selon la revendication 7, **caractérisé en ce qu'**une ou plusieurs charges sont présentes en tant qu'additifs.

9. Composé selon la revendication 7 ou 8, **caractérisé en ce que** la ou les charges sont choisies parmi BN, SiC, MOS₂, PTFE, fibres de carbone, billes de verre, billes creuses de verre, fibres de verre, suie, particules de carbone et graphite.

10. Composant, en particulier composant contraint mécaniquement, fabriqué en utilisant un composé selon l'une ou selon plusieurs des revendications 1 à 9.

11. Composant selon la revendication 10, **caractérisé en ce que** le composant est configuré sous forme de tube ou de tuyau ou fabriqué sous forme de pièce moulée par injection.

12. Composant selon la revendication 10, **caractérisé en ce que** le composé est foisonné.

13. Câble électrique, en particulier câble pour haute fréquence, comprenant une isolation fabriquée en utilisant un composé selon l'une des revendications 1 à 9.

14. Câble électrique selon la revendication 13, **caractérisé en ce que** l'isolation présente une structure en mousse.

15. Palier lisse, en particulier palier lisse pour marche à sec, fabriqué en utilisant un composé selon l'une des revendications 1 à 9.
